# EUROPÄISCHE PATENTSCHRIFT

(11) **EP 3 433 684 B1**
(45) Veröffentlichungstag und Bekanntmachung des Hinweises auf die Patenterteilung: **12.05.2021**
(21) Anmeldenummer: 17713249.5
(22) Anmeldetag: 23.03.2017
(51) Int. Cl.: G05B 17/00

(54) **VORRICHTUNG UND VERFAHREN ZUM KONFIGURIEREN EINER MULTIVALENTEN ENERGIEVERSORGUNGSANLAGE**
DEVICE AND METHOD FOR CONFIGURING A MULTIVALENT ENERGY SUPPLY INSTALLATION
DISPOSITIF ET PROCÉDÉ DE CONFIGURATION D'UNE INSTALLATION D'ALIMENTATION EN ÉNERGIE MULTIVALENTE

(30) Priorität: 24.03.2016 DE 102016205033
(43) Veröffentlichungstag der Anmeldung: 30.01.2019
(73) Patentinhaber: Viessmann Climate Solutions SE, 35108 Allendorf (Eder) (DE)
(72) Erfinder: ARNOLD, Christian, 36119 Neuhof-Rommerz (DE); BOCK, Martin, 35110 Frankenau (DE); GRAD, Andrej, 35088 Battenberg (DE); MAURER, Tobias, 35108 Allendorf (DE); OSTERLOH, Reinhard, 59955 Winterberg (DE); TIMMERMANN, Jörg, 35088 Battenberg (DE)
(74) Vertreter: MERH-IP Matias Erny Reichl Hoffmann Patentanwälte PartG mbB
(86) Internationale Anmeldenummer: PCT/EP2017/056930
(87) Internationale Veröffentlichungsnummer: WO 2017/162796

(56) Entgegenhaltungen:
- EP-A2- 2 187 136
- DE-A1- 10 348 563
- DE-B3-102008 063 954
- DE-U1-202006 001 553
- US-A1- 2007 038 321
- US-A1- 2007 233 286

## Beschreibung

Die vorliegende Erfindung betrifft eine Anordnung aus einer Vorrichtung zum Konfigurieren einer multivalenten Energieerzeugungsanlage und einer Steuereinrichtung und ein Verfahren zum Konfigurieren einer multivalenten Energieversorgungsanlage.

Ein Verfahren zum Betreiben eines Systems mit mehreren Wärmeerzeugungseinrichtungen ist beispielsweise aus der EP 2187136 A2 bekannt. Das System kann Wärmeleistung unter Verwendung mehrerer Wärmeerzeugungseinrichtungen bereitstellen, wobei die Verteilung der Wärmeleistung auf die einzelnen Wärmeerzeugungseinrichtungen variabel ist, so dass diese nahe an ihrem optimalen Wirkungsgrad betrieben werden können. Die Zuteilung der Leistung kann nicht nur über ein übergeordnetes Kesselmanagementsystem erfolgen, sondern auch durch Abstimmung der einzelnen Wärmeerzeugungseinrichtungen untereinander erfolgen.

Aus der internationalen Patentanmeldung WO 2009/141176 A1 ist ein mobiles Heizsystem bekannt, das eine Mehrzahl von brennstoffbetriebenen Heizgeräten aufweist, die über ein Bussystem miteinander in Kommunikationsverbindung stehen. Das Heizsystem ist derart eingerichtet, dass sich beim Starten des Heizsystems, basierend auf vorbestimmten Regeln, eines der Heizgeräte als Master bezüglich der Ansteuerung von weiteren, an das Bussystem angeschlossenen Heizgeräten konfiguriert. Die verbleibenden Heizgeräte werden als Slaves konfiguriert.

Ein hybrides Heizsystem bestehend aus mindestens einem Brennwertkessel und mindestens einem Nicht-Brennwertkessel ist aus der internationalen Patentanmeldung WO 2008/091970 A2 bekannt. Das Zu- beziehungsweise Abschalten der einzelnen Kessel durch eine Steuerung erfolgt nach Bestimmung der Heizlast unter anderem auf Basis des Flusses in der Hauptleitung des Heizsystems sowie weiterer Startkriterien. Die Auswahl der Kessel erfolgt ferner in Abhängigkeit der Außentemperatur sowie der Betriebsstunden der einzelnen Kessel.

Die US Patentanmeldung US 2007/038321 A1 offenbart ein Verfahren zum Simulieren einer Industrieanlage. Das Verfahren umfasst das Erzeugen einer Bibliothek von Industrieanlagenkomponententypen unter Verwendung von Benutzereingaben. Die Bibliothek enthält Eigenschaften der Komponententypen und Regeln zum Generieren von Skripten gemäß den Eigenschaftswerten. Das Verfahren umfasst ferner das Zusammenstellen einer Konfiguration von Industrieanlagenkomponenten aus der Bibliothek unter Verwendung von Benutzereingaben. Die Konfiguration wird zu einem Editor zusammengefasst, der so konfiguriert ist, dass er ein Layout und eine Verbindung der Konfiguration von Industrieanlagenkomponenten und eine Konfiguration und Einstellung der Eigenschaften der Industrieanlagenkomponenten akzeptiert. Aus der deutschen Patentanmeldung DE 10348563 A1 sind Prozessanlagen und insbesondere eine intelligente Steuerungs- und Simulationsumgebung bekannt, die dem Anwender erlaubt, das Betrachten, die Simulation und die Steuerung auf der Systemebene der Prozessanlagen-Steuerungsarchitektur zu integrieren.

Das Gebrauchsmuster DE 202006001553 U1 beschreibt ein Schulungsgerät zum Simulieren einer Heizungsregelung, mit einer als Regelung oder Steuerung ausgebildeten elektrischen Steuereinrichtung, wenigstens einem mit der Steuereinrichtung elektrisch verbindbaren und ein Bedienelement aufweisenden Simulator, von dem ein elektrisches Signal in Abhängigkeit von einer Betätigung des Bedienelements variierbar und/oder generierbar ist, und wenigstens einem mit der Steuereinrichtung elektrisch verbindbaren Messfühler zur Erfassung einer physikalischen Größe, von dem ein elektrisches Signal in Abhängigkeit von der erfassten physikalischen Größe variierbar und/oder generierbar ist.

Der vorliegenden Erfindung liegt die Aufgabe zugrunde, eine Vorrichtung zum Konfigurieren einer multivalenten Energieversorgungsanlage anzugeben. Insbesondere soll eine solche Vorrichtung dahingehend verbessert werden, dass eine Vielzahl verschiedener Anlagenkonfigurationen erstellt werden können.

Gemäß einem ersten Aspekt der Erfindung wird eine Anordnung aus einer Vorrichtung zum Konfigurieren einer multivalenten Energieerzeugungsanlage und einer Steuereinrichtung nach Patentanspruch 1 bereitgestellt. Gemäß einem zweiten Aspekt der Erfindung wird ein Verfahren zum Konfigurieren und Steuern einer multivalenten Energieerzeugungsanlage nach Patentanspruch 10 bereitgestellt. Weitere Aspekte der Erfindung sind Gegenstand der Unteransprüche, Zeichnungen und der folgenden Beschreibung von Ausführungsbeispielen.

Die Lösung der Aufgabe erfolgt durch Bereitstellen einer Anordnung aus einer Vorrichtung zum Konfigurieren einer multivalenten Energieerzeugungsanlage und einer Steuereinrichtung, wobei die Vorrichtung zum Konfigurieren eine Speichereinrichtung umfasst, in der eine Basiskonfiguration gespeichert ist. Die Basiskonfiguration ist eine schematische Darstellung einer verallgemeinerten Infrastruktur einer multivalenten Energieversorgungsanlage. Die Basiskonfiguration umfasst Platzhalter für mögliche Komponenten der Energieversorgungsanlage sowie deren Beziehungen untereinander. Insbesondere umfasst die Basiskonfiguration eine Vielzahl von Energieerzeugern, die mindestens zwei verschiedene Energieträger nutzen, um Energie in Form von Wärme und/oder Kälte und/oder elektrischer Energie bereitzustellen.

Die Basiskonfiguration kann durch Ersetzen der Platzhalter mit den tatsächlich in der multivalenten Energieerzeugungsanlage vorhandenen Komponenten auf eine tatsächlich vorliegende oder geplante Anlagenkonfiguration angepasst werden. Das Ergebnis des Anpassens kann zum Beispiel eine Anlagenkonfiguration in Form eines Hydraulikschemas einer Heizungsanlage und/oder ein Blockschaltbild einer multivalenten Energieerzeugungsanlage sein, welches die Beziehungen zwischen den einzelnen Komponenten und/oder deren Funktionen und/oder deren Wirkungen graphisch darstellt. Das Hydraulikschema und/oder das Blockschaltbild dienen zum Konfigurieren einer Steuereinrichtung zum Steuern der multivalenten Energieerzeugungsanlage. Die Speichereinrichtung ist dazu ausgelegt, das Hydraulikschema oder das Blockschaltbild zu speichern. Ferner ist die Vorrichtung zum Konfigurieren dazu ausgelegt, das Hydraulikschema oder das Blockschaltbild an die Steuereinrichtung zum Steuern der multivalenten Energieerzeugungsanlage, beispielsweise über eine geeignete Datenkommunikationsverbindung, zu übermitteln.

Die Vorrichtung zum Konfigurieren einer multivalenten Energieversorgungsanlage kann als elektronische Datenverarbeitungsvorrichtung, wie etwa ein Computer, ein Tablet-Computer, ein Smartphone, ein Laptop oder eine sonstige elektronische Steuervorrichtung, insbesondere mit einem Mikroprozessor, realisiert sein. Die Vorrichtung zum Konfigurieren ist dafür ausgelegt, mit der Steuereinrichtung zum Steuern der multivalenten Energieerzeugungsanlage zu kommunizieren. Die Vorrichtung zum Konfigurieren kann auch als Teil der Steuereinrichtung zum Steuern der multivalenten Energieerzeugungsanlage ausgeführt sein. Die Vorrichtung zum Konfigurieren ist dazu ausgelegt, die Basiskonfiguration beziehungsweise eine aus der Basiskonfiguration erzeugte konkrete Anlagenkonfiguration an die Steuereinrichtung zu übertragen, so dass die Steuereinrichtung die Energieerzeuger in Abhängigkeit ihrer erfassten Art und Position innerhalb der Basiskonfiguration beziehungsweise der erzeugten Anlagenkonfiguration steuern kann.

Die Steuereinrichtung, die dafür ausgelegt ist, anhand einer Basiskonfiguration gemäß der Erfindung konfiguriert zu werden, kann eine Vielzahl von multivalenten Energieerzeugungsanlagen steuern und durch einfaches Hinzufügen oder Entfernen einzelner Komponenten auf sich ändernde Anlagenkonfigurationen angepasst werden.

Die Lösung der Aufgabe gelingt ferner durch Angeben eines Verfahrens zum Konfigurieren und Steuern einer multivalenten Energieerzeugungsanlage. Das Verfahren umfasst einen ersten Schritt des

Auslesens einer Basiskonfiguration aus einer Speichereinrichtung. Durch eine Erfassungseinrichtung wird für jeden der Energieerzeuger eine Art aus einer vorbestimmten Menge von Energieerzeugerarten und eine Position des Energieerzeugers innerhalb der Basiskonfiguration erfasst. Aus Basiskonfiguration und den erfassten Arten und Positionen von Energieerzeugern wird eine konkrete Anlagenkonfiguration erzeugt. Die erzeugte Anlagenkonfiguration wird an eine Steuereinrichtung übertragen, so dass die Steuereinrichtung die die Energieerzeuger in Abhängigkeit der übertragenen Anlagenkonfiguration steuert.

Die Basiskonfiguration umfasst einen Vorlauf, durch den ein Trägermedium fließt, welches Energie von den Energieerzeugern aufnimmt und zu einem Verbraucherkreislauf transportiert. Der Verbraucherkreislauf kann eine Vielzahl verschiedener und/oder gleichartiger Verbraucher umfassen. Ein Verbraucher kann eine beliebige Vorrichtung sein, die Energie verbraucht, wie zum Beispiel ein Heizkörper.

Im Falle eines Heizungssystems kann der Vorlauf als Rohrleitung ausgeführt sein, in der ein fluides Trägermedium fließt, das Wärme von einem als Heizungskessel ausgeführten Energieerzeuger aufnimmt. Im Falle eines elektrischen Energieerzeugers ist der Vorlauf eine elektrische Leitung, in der elektrische Energie in Form von elektrischem Strom fließt. Als Trägermedium können dann entsprechend die Ladungsträger in der elektrischen Leitung aufgefasst werden.

Die Basiskonfiguration umfasst außerdem einen Rücklauf, der das vom Verbraucherkreislauf kommende Trägermedium an die Energieerzeuger zurückführt. Wie beim Vorlauf kann der Rücklauf im Falle eines Heizungssystems eine Rohrleitung sein, in der das fluide Trägermedium vom Verbrauchkreislauf zurück in den Erzeugerkreislauf fließt. Entsprechend ist der Rücklauf im Falle eines elektrischen Energieerzeugers eine elektrische Leitung, die den elektrischen Stromkreis vom Verbraucher zum Energieerzeuger schließt. Da dies auch über das Erdpotential erfolgen kann, ist in solchen Fällen keine direkte Leiterverbindung als Rücklauf zwischen Verbrauchern und Energieerzeugern nötig.

Die Basiskonfiguration umfasst ferner einen Pufferspeicher zum Zwischenspeichern von Energie in Form von Wärme und/oder Kälte und/oder elektrischer Energie (beispielsweise in Form von elektrischer Ladung). Ein Pufferspeicher kann beispielsweise ein Warmwasserspeicher, eine Batterie, ein Akku oder ein Kondensator sein. Der Pufferspeicher ist mit dem Vorlauf verbunden um Energie aufnehmen zu können. Ferner kann der Pufferspeicher mit dem Rücklauf verbunden sein. Die Energiezufuhr findet über den Vorlauf statt. Das Abrufen der Energie vom Pufferspeicher kann ebenfalls über den Vorlauf stattfinden. Hierzu kann der Pufferspeicher Ventile beziehungsweise Schalter aufweisen, über die ein Zuführen und Abrufen der Energie entsprechend geregelt werden kann.

Eine erste Energieübergabe kann in der Basiskonfiguration angeordnet sein. In Bezug zum Pufferspeicher ist die Energieübergabe vorzugsweise stromabwärts am Vorlauf angeordnet. Der Begriff stromabwärts bezieht sich hierbei auf die Strömungsrichtung eines Trägermediums von den Energieerzeugern zum Verbraucherkreislauf. An der Energieübergabe kann ein Austausch von Energie zwischen dem Erzeugerkreislauf (Primärseite) und einem Verbraucherkreislauf (Sekundärseite) stattfinden. Die Energieübergabe kann zusätzlich auch am Rücklauf angeordnet sein.

Eine Energieübergabe kann eine Wärmeübergabe sein, an der Wärme vom Trägermedium des Erzeugerkreislaufs (Primärseite) auf ein Trägermedium des Verbraucherkreislaufs (Sekundärseite) übertragen wird. Die beiden Kreisläufe sind in der Regel getrennt, so dass sich die Trägermedien nicht mischen können. Die Wärmeübertragung findet über Materialien statt, die besonders gut wärmeleitend sind.

Durch Verwenden einer Energieübergabe kann ein direkter Austausch von Trägermedien zwischen dem Erzeugerkreislauf und einem Verbraucherkreislauf vermieden werden. Es findet somit nur ein Energietransfer aber kein materieller Transfer vom erzeugerseitigen (Primärseite) Trägermedium zu einem verbraucherseitigen (Sekundärseite) Trägermedium statt.

Innerhalb der Basiskonfiguration sind die Energieerzeuger an verschiedenen Positionen parallel zum Pufferspeicher zwischen Vorlauf und Rücklauf angeordnet. Sie können beiderseits des Pufferspeichers, also stromabwärts und/oder stromabwärts, am Vorlauf angeordnet sein. Außerdem können Energieerzeuger in Reihe im Vorlauf angeordnet sein. Insbesondere können die Energieerzeuger zwischen einem Pufferspeicher und einer ersten Energieübergabe im Vorlauf angeordnet sein. Ein in Reihe angeordneter Energieerzeuger kann zum Beispiel den Energiegehalt eines vom Pufferspeicher kommenden Trägermediums erhöhen, ohne eine Menge des Trägermediums aus dem Rücklauf hinzuzumischen.

Aus einer Basiskonfiguration kann ein tatsächliches Hydraulikschema beziehungsweise ein tatsächlicher Infrastrukturaufbau einer multivalenten Energieversorgungsanlage durch Auswählen der Komponenten bestimmt werden. Die einzelnen wählbaren Komponenten umfassen dabei auch Informationen über deren Funktionen und Wirkung. Die Basiskonfiguration und ein Hydraulikschema beziehungsweise Blockschaltbild stellen zudem die Beziehungen, wie zum Beispiel die hydraulische Anbindung, zwischen den einzelnen Komponenten graphisch dar.

Die Steuerung von multivalenten Energieversorgungsanlagen kann sehr komplex sein und erfordert in der Regel angepasste, maßgeschneiderte Lösungen. Der Entwicklungsaufwand und die damit verbundenen Kosten zum Bereitstellen einer Anlagensteuerung können je nach Komplexität der Energieversorgungsanlage sehr hoch ausfallen. Andererseits kann bei der Installation einer Energieversorgungsanlage die Konfiguration einer entsprechenden Steuerungsehr kompliziert und zeitintensiv sein. Ziel der Erfindung ist es daher, eine Vorrichtung bereitzustellen, die es erlaubt, eine Vielzahl verschiedener multivalenter Energieversorgungsanlagen anhand einer Basiskonfiguration zu konfigurieren. Die Basiskonfiguration kann Beziehungen, Funktionen und Wirkungen einer Vielzahl von Komponenten darstellen. Eine Steuereinrichtung kann auf Grundlage einer Basiskonfiguration konfiguriert werden, um eine multivalente Energieversorgungsanlage zu steuern.

Eine multivalente Energieversorgungsanlage ist eine Energieversorgungsanlage, die mehr als einen Energieträger als Energiequelle verwendet. Sie weist mindestens zwei Energieerzeuger auf, die jeweils eine nutzbare Energieform, wie zum Beispiel Wärme, Kälte, mechanische Energie und/oder elektrische Energie (beispielsweise elektrischer Strom und/oder elektrische Spannung), bereitstellen. Wärme kann beispielsweise für eine Warmwasserversorgung und/oder eine Heizungsanlage und/oder als Prozesswärme, beispielsweise für industrielle Anwendungen, bereitgestellt werden. Zum Transportieren der Wärme wird üblicherweise ein fluides Trägermedium, also ein Gas oder eine Flüssigkeit, verwendet, beispielweise Wasser oder Wasserdampf.

Um eine multivalente Energieversorgungsanlage optimal zu betreiben, muss die Steuerung der Energieversorgungsanlage in Abhängigkeit der spezifischen Eigenschaften der Energieerzeuger, die unter anderem von der Art des genutzten Energieträgers abhängen, erfolgen. Die vorliegende Erfindung zielt darauf ab, diese spezifischen Eigenschaften in synergetischer Weise miteinander zu kombinieren. In anderen Worten ausgedrückt erlaubt es das erfindungsgemäße Verfahren, die jeweiligen Vorteile verschiedener Energieträger optimal miteinander zu kombinieren. Dies gelingt durch eine koordinierte Steuerung der Energieerzeuger, so dass aus der Multivalenz der Energieversorgungsanlage ein Zusatznutzen erzielt werden kann. Insbesondere kann dabei eine Kombination aus regenerativen und fossilen Energieträgern verwendet werden, so dass gleichzeitig ein besonders effizienter und wirtschaftlicher Betrieb der Energieversorgungsanlage bei zuverlässiger Energiebereitstellung erreicht wird. Die Energieversorgungsanlagensteuerung zielt zudem darauf ab, auf sich ändernde Bedingungen reagieren zu können. So kann zum Beispiel eine starke Fluktuation in der Verfügbarkeit eines der genutzten Energieträger durch Verwenden mindestens eines zweiten, jederzeit verfügbaren Energieträgers ausgeglichen werden.

Die mindestens zwei Energieerzeuger der multivalenten Energieversorgungsanlage nutzen mindestens zwei verschiedene Energieträger. Als Energieträger können beispielsweise fossile und/oder regenerative Energieträger zum Einsatz kommen. Beispielsweise können zwei oder mehr aus der folgenden Liste verwendet werden: Kohle, Erdgas, Heizöl, Diesel, Benzin, Wasserstoff, Biogas, Holz (zum Beispiel in Form von Pellets) oder andere Arten von Biomasse, geothermische Energie, Sonnenstrahlung, Wind, elektrische Energie (zum Beispiel elektrischer Strom und/oder elektrische Spannung), Fernwärme, mechanische Energie (zum Beispiel Wasserkraft).

Eine multivalente Energieversorgungsanlage gemäß der Erfindung weist mindestens zwei Energieerzeuger auf, beispielsweise zwei oder mehr aus der folgenden Liste: Ölheizkessel, Gasheizkessel, Brennwertkessel, Blockheizkraftwerk (BHKW), Holzkessel, elektrische Wärmepumpe, Photovoltaikanlage, Windturbine, thermischer Sonnenkollektor, Brennstoffzelle. Außerdem kann eine Wärme-Kraft-Kopplung, beispielsweise mit einem Stirlingmotor implementiert sein.

Die verschiedenen Energieerzeuger können sehr unterschiedliche Eigenschaften aufweisen und dementsprechend unterschiedliche oder sogar gegensätzliche Anforderungen bei deren Betrieb in einer multivalenten Energieversorgungsanlage stellen. Im Folgenden werden typische Merkmale einiger ausgewählter Energieerzeuger bespielhaft beschrieben.

Ein Ölheizkessel beziehungsweise Gasheizkessel nutzt die fossilen Energiequellen Heizöl beziehungsweise Erdgas und liefert Wärme, die üblicherweise auf ein fluides Trägermedium, meistens Wasser, übertragen wird. Er kann innerhalb kurzer Zeit hohe Leistungen liefern und auch schnell abgeschaltet werden. Ein solcher Heizkessel ist gut regelbar und kann daher im modulierenden Betrieb verwendet werden. Ein Heizkessel erlaubt zudem häufiges Ein- und Ausschalten und kann daher auch zweistufig im Ein-/Ausschaltbetrieb eingesetzt werden. Ölheizkessel und Gasheizkessel sind somit in ihrem Betrieb besonders flexibel einsetzbar und werden häufig als sogenannte Spitzenlastkessel verwendet, die schnell auf Schwankungen von Energiebereitstellungsanforderungen reagieren sollen.

Ein Blockheizkraftwerk (BHKW) nutzt üblicherweise fossile Energieträger, könnte aber auch mit Biogas oder Wasserstoff, der aus regenerativen Quellen stammt, betrieben werden. Es liefert Wärme und elektrische Energie (elektrischer Strom und oder elektrische Spannung), ist gut regelbar und kann schnell auf hohe Leistungen hochgefahren und auch schnell wieder runtergefahren werden. Im Unterschied zum Heizkessel soll das BHKW aber nicht häufig einbeziehungsweise ausgeschaltet werden. Um ein BHKW wirtschaftlich zu betreiben wird es in der Regel im Dauerbetrieb eingesetzt.

Ein Holzkessel nutzt festen Brennstoff aus einer nachwachsenden Energiequelle (Holz, zum Beispiel in Form von Pellets oder Hackschnitzel) und liefert Wärme. Er ist nur mäßig regelbar und kann nur relativ langsam auf hohe Leistungen hochgefahren beziehungsweise wieder runtergefahren werden. Aufgrund der langen Schaltzeiten soll ein Holzkessel nicht häufig einbeziehungsweise ausgeschaltet werden. Beim Ausschalten muss schon aus Sicherheitsgründen üblicherweise abgewartet werden, bis der bereits in der Brennkammer befindliche Brennstoff vollständig verbrannt ist. Beim Einschalten muss hingegen zunächst ausreichend Brennstoff in die Brennkammer transportiert und entzündet werden. Er verursacht relativ niedrige Energiegesamtkosten. Daher wird er meist als Grundlastkessel verwendet, der möglichst kontinuierlich in Betrieb ist und eine Mindestenergieanforderung einer Energieversorgungsanlage erfüllen kann.

Um auf Schwankungen in der angeforderten Energiemenge reagieren zu können, wird ein Holzkessel meist in Kombination mit einem Pufferspeicher verwendet, der die vom Holzkessel bereitgestellte Wärme zwischenspeichert, wenn die von den Verbrauchern geforderte Wärmemenge kleiner als die vom Holzkessel bereitgestellte Wärmemenge ist. Ist die von den Verbrauchern geforderte Wärmemenge größer als die vom Holzkessel bereitgestellte Wärmemenge, kann zunächst die gespeicherte Wärmemenge vom Pufferspeicher wieder abgegeben werden. Alternativ oder zusätzlich zum Pufferspeicher wird häufig ein Gasheizkessel zusammen mit Holzkesseln in einer Energieversorgungsanlage verwendet. Der Gasheizkessel wird dann zugeschaltet, wenn die geforderte Wärmemenge die vom Holzkessel und vom Pufferspeicher verfügbare Wärmemenge überschreitet. Der Gasheizkessel wird also als Spitzenlastkessel benutzt.

Eine elektrische Wärmepumpe verbraucht elektrische Energie und nutzt daher, je nachdem aus welcher Quelle die elektrische Energie gewonnen wurde, fossile und/oder regenerative Energiequellen. Sie kann Wärme und/oder Kälte liefern, hat jedoch einen eingeschränkten Temperaturbereich. Üblicherweise kann eine Wärmepumpe eine maximale Vorlauftemperatur von 60°C bereitstellen. Sie ist gut regelbar und kann schnell auf hohe Leistungen hochgefahren und auch schnell wieder runtergefahren werden. Allerdings darf sie nicht häufig ein- beziehungsweise ausgeschaltet werden. Sie verursacht relativ niedrige Energiegesamtkosten.

Eine weitere Komponente, die in vielen multivalenten Energieversorgungsanlagen verwendet wird ist ein Pufferspeicher. Der Pufferspeicher kann von Energieerzeugern bereitgestellte Energie zeitlich zwischenspeichern. Je nach Energieform kann ein Pufferspeicher zum Beispiel ein Speicher von elektrische Energie, beispielsweise in Form von Akkus oder Kondensatoren, oder ein Wärmespeicher und/oder Kältespeicher, beispielsweise in Form eines isolierten Wassertanks, sein. Außerdem kann Energie auch in Form von mechanischer Energie gespeichert werden, zum Beispiel in einem Schwungrad. Ein Pufferspeicher erlaubt das zumindest teilweise Entkoppeln des Betriebs der Energieerzeuger von den Energieverbrauchern. Hierdurch kann der Wirkungsgrad einer multivalenten Energieversorgungsanlage verbessert werden.

In einer multivalenten Energieversorgungsanlage kann es zudem Energieerzeuger geben, die gleichzeitig mehr als eine Energieform bereitstellen können. Je nach Anforderung kann es nötig sein, festzulegen, unter welchen Voraussetzungen solche Energieerzeuger geschaltet und/oder geregelt werden sollen. Mit Hilfe eines Hydraulikschemas beziehungsweise Blockschaltbilds kann eine Steuereinrichtung bestimmen, welche Energieerzeuger nach welchen Kriterien zugeschaltet werden können oder sollen. Zudem kann das Hydraulikschema beziehungsweise das Blockschaltbild angeben, welche Energieerzeuger-Arten in der Energieversorgungsanlage vertreten sind. Zusätzlich erhält die Steuereinrichtung Informationen über die jeweiligen Eigenschaften der Energieerzeuger, die für einige Energieerzeuger schon im Detail beispielhaft beschrieben wurden.

Ferner kann ein Hydraulikschema beziehungsweise Blockschaltbild Informationen über steuerbare Einrichtungen einer Komponente enthalten. So können die Energieerzeuger zum Beispiel eine oder mehrere der folgend aufgezählten Einrichtungen umfassen: Temperatursensoren, Stromsensoren (Volumenstrom und/oder elektrischer Strom), Umwälzpumpe, Erzeugerpumpe, Ventile, Rücklaufmischer, Vorlaufmischer, Bypass, Drosselklappe.

Ferner können im Vorlauf und/oder im Rücklauf Ventile, Temperatursensoren, Strom-Messgeräte (zum Messen eines elektrischen Stroms beziehungsweise zum Messen eines Volumenstroms), Spannungsmessgeräte (zum Messen einer elektrischen Spannung), Dioden, Sicherungen, und/oder weitere Komponenten, die durch die Steuereinrichtung regelbar sind oder der Steuereinrichtung Informationen über Betriebszustände liefern, angeordnet sein. Das aus der Basiskonfiguration gewonnene Hydraulikschema oder Blockschaltbild umfasst hierzu auch die Position der jeweiligen Komponenten, so dass die Steuereinrichtung beispielsweise für eine geforderte Anlagenvorlauftemperatur an einer bestimmten Stelle in der Energieversorgungsanlage Sollwerte für die Energieerzeuger bestimmen kann, um die Forderung zu erfüllen.

Ein BHKW kann sowohl Wärme als auch elektrische Energie (elektrischer Strom und/oder elektrische Spannung) bereitstellen. Folglich können für ein BHKW zwei unterschiedliche Forderungen aus den beiden Energieformen vorliegen. Die vom BHKW bereitgestellte elektrische Energie kann bei Nichtvorliegen einer entsprechenden Forderung der durch die multivalente Energieversorgungsanlage versorgten Verbraucher jederzeit in ein öffentliches Stromnetz eingespeist werden. Die Anlagenkonfiguration umfasst hierzu auch Informationen über eine Energieübergabe mit einem öffentlichen Stromnetz.

Jeder Energieerzeuger in der Energieversorgungsanlage weist eine Regeleinrichtung zum Regeln von Zustandsgrößen des Energieerzeugers auf. Zustandsgrößen eines Energieerzeugers umfassen beispielsweise eine Kesseltemperatur des Energieerzeugers, einen Volumen- und/oder Massenstrom eines Trägermediums durch den Energieerzeuger, eine Temperatur des Trägermediums am Vorlauf und/oder am Rücklauf des Energieerzeugers, eine Leistungsaufnahme des Energieerzeugers und/oder eine Leistungsabgabe des Energieerzeugers. Bei einem Energieerzeuger, der elektrische Energie bereitstellt, können die Zustandsgrößen einen elektrischen Strom, eine elektrische Leistung und/oder eine elektrische Spannung betreffen.

Die Regeleinrichtungen werden von einer Steuereinrichtung koordiniert, die den Regeleinrichtungen übergeordnet ist. Die Steuereinrichtung ist dafür ausgelegt, eine Energiebereitstellungsanforderung für Energie in Form von Wärme und/oder Kälte und/oder elektrischer Energie zu erfassen. Eine Energiebereitstellungsanforderung kann beispielsweise eine Anforderung nach einer bestimmten Vorlauftemperatur an einer vorgegebenen Stelle des Hydraulikschemas oder eine bestimmte Temperatur in einem Pufferspeicher, insbesondere in einem bestimmten Bereich des Pufferspeichers, oder eine elektrische Leistung an einer Energieübergabe sein. Die Energiebereitstellungsanforderung kann beispielsweise von einem Verbraucher oder einem Verbund von Verbrauchern erzeugt werden und über eine geeignete Datenkommunikationsverbindung an die Steuereinrichtung ausgegeben werden. Die Steuereinrichtung ermittelt unter Verwendung des konfigurierten Hydraulikschemas beziehungsweise des Blockschaltbilds welcher Energieerzeuger an welcher Position oder welcher Pufferspeicher zum Erfüllen der Energiebereitstellungsanforderung verwendet werden kann.

Vorteilhafte Aus- und Weiterbildungen, welche einzeln oder in Kombination miteinander eingesetzt werden können, sind Gegenstand der abhängigen Ansprüche.

Eine bevorzugte Basiskonfiguration weist mindestens zwei Energieerzeuger auf, die parallel zueinander zwischen einem Vorlauf und einem Rücklauf angeordnet sind.

Es können mindestens zwei Energieerzeuger in Bezug auf den Pufferspeicher stromaufwärts am Vorlauf angeordnet sein. Stromaufwärts bedeutet hier insbesondere in Bezug auf eine Rohrleitung in der ein flüssiges Trägermedium fließt entgegen der Flussrichtung. Stromabwärts bedeutet entsprechend entlang der Flussrichtung des Trägermediums. Die Anzahl der Energieerzeuger kann im Prinzip beliebig hoch sein.

Bei einer bevorzugten Basiskonfiguration ist mindestens ein Energieerzeuger in Bezug auf den Pufferspeicher stromabwärts am Vorlauf angeordnet. Die durch den Energieerzeuger gelieferte Energie kann dann gegebenenfalls nicht im Pufferspeicher gespeichert werden sondern fließt immer direkt über den Vorlauf zu den Verbrauchern. Ein solcher Energieerzeuger stromabwärts des Pufferspeichers kann zum Beispiel bei einer Heizungsanlage dazu dienen, die Vorlauftemperatur des aus dem Pufferspeicher kommenden Trägermediums bei Bedarf auf eine höhere Temperatur anzuheben.

In der Basiskonfiguration können parallel zur ersten Energieübergabe mindestens eine primärseitige Energieübergabe stromaufwärts zur ersten Energieübergabe am Vorlauf und/oder mindestens eine sekundärseitige Energieübergabe stromabwärts zur ersten Energieübergabe am Vorlauf angeordnet sein. Durch die primärseitige und sekundärseitige Energieübergabe können weitere jeweils voneinander unabhängige Verbraucherkreisläufe mit Energie versorgt werden.

In der Basiskonfiguration können parallel zum ersten Pufferspeicher mindestens ein primärseitiger Pufferspeicher stromaufwärts zum ersten Pufferspeicher am Vorlauf und/oder mindestens ein sekundärseitiger Pufferspeicher stromabwärts zum ersten Pufferspeicher am Vorlauf angeordnet sein. Falls der erste Pufferspeicher bereits

Mindestens ein Energieerzeuger kann in Reihe zwischen dem Pufferspeicher und der Energieübergabe im Vorlauf angeordnet sein. Ein in Reihe angeordneter Energieerzeuger kann beispielsweise ein Gasheizkessel sein, der eine Vorlauftemperatur direkt anheben kann, ohne eine Menge des Trägermediums aus dem Rücklauf beizumischen. Ein solcher in Reihe geschalteter Heizkessel kann somit wie ein Durchlauferhitzer funktionieren.

Die Erfassungseinrichtung kann dafür ausgelegt sein, für jeden der Pufferspeicher eine Art aus einer vorbestimmten Menge von Pufferspeicherarten zu erfassen. Hierbei wird unter Anderem erfasst, welche Energieart gespeichert wird. Ferner kann eine konkrete Ausführungsform eines solchen Pufferspeichers, zum Beispiel aus einer Liste, ausgewählt werden. Hierzu können auch funktionelle Details des Pufferspeichers abgespeichert sein. Eine mögliche auswählbare Pufferspeicherart kann auch eine einfache Direktverbindung sein, die dann ausgewählt wird, wenn kein Pufferspeicher an der jeweiligen Position (erster Pufferspeicher, primärseitig, sekundärseitig) vorhanden ist. Ferner können Pufferspeicher mit oder ohne Beimischpumpe, mit oder ohne Rücklaufmischer, mit oder ohne Pufferentladeventil, mit oder ohne Pufferentladepumpe und/oder mit oder ohne Temperatursensoren ausgewählt beziehungsweise erfasst werden.

Die Erfassungseinrichtung kann ferner dafür ausgelegt sein, für jede der Energieübergaben eine Art aus einer vorbestimmten Menge von Energieübergabearten zu erfassen. Hierbei wird erfasst, welche Energieart übertragen wird. Ferner kann eine konkrete Ausführungsform einer solchen Komponente, zum Beispiel aus einer Liste, ausgewählt werden. Hierzu können auch funktionelle Details der Komponente abgespeichert sein. Eine mögliche auswählbare Energieübergabeart kann auch eine einfache Direktverbindung sein, die dann ausgewählt werden kann, wenn keine Energieübergabe an der jeweiligen Position vorhanden ist. Ferner können Energieübergaben mit oder ohne Vorlaufpumpe, mit oder ohne Anlagenmischer, mit oder ohne Wärmetauscher und/oder mit oder ohne hydraulischer Weiche ausgewählt beziehungsweise erfasst werden.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
Figur 1 eine Basiskonfiguration gemäß einem ersten Ausführungsbeispiel.
Figur 2 ein Hydraulikschema einer multivalenten Energieversorgungsanlage gemäß einem zweiten Ausführungsbeispiel mit zwei BHKWs und zwei Gaskesseln.
Figur 3 ein Hydraulikschema einer multivalenten Energieversorgungsanlage gemäß einem dritten Ausführungsbeispiel mit zwei Holzkesseln und einem Gaskessel.
Figur 4 ein Hydraulikschema einer multivalenten Energieversorgungsanlage gemäß einem vierten Ausführungsbeispiel mit einer Wärmepumpe und einem Gaskessel.
Figur 5 ein Hydraulikschema einer multivalenten Energieversorgungsanlage gemäß einem fünften Ausführungsbeispiel mit zwei Ölkesseln und zwei Gaskesseln.
Figur 6 ein Hydraulikschema einer multivalenten Energieversorgungsanlage gemäß einem sechsten Ausführungsbeispiel mit zwei Gaskesseln, zwei BHKWs und zwei Holzkesseln.

### Ausführliche Beschreibung von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

### Erstes Ausführungsbeispiel

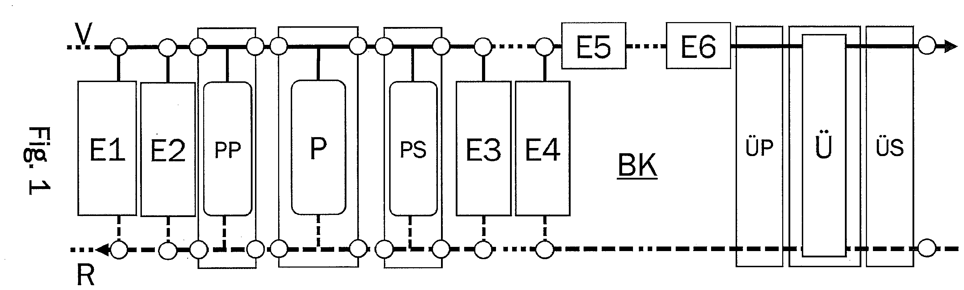

Figur 1 zeigt eine Basiskonfiguration BK gemäß einem ersten Ausführungsbeispiel. Die Basiskonfiguration BK umfasst sechst Energieerzeuger E1...E6, drei Pufferspeicher P, PP, PS und drei Energieübergaben Ü, ÜP, ÜS, die jeweils an einem Vorlauf V und einem Rücklauf R angeordnet sind. Die Energieerzeuger E5, E6, die in Serie geschaltet sind, haben keine direkte Verbindung mit dem Rücklauf. Die Anzahl der Energieerzeuger kann beliebig erweitert werden, was durch die Punkte in der Darstellung der Vorlauf- und Rücklaufleitungen angedeutet ist.

Um eine konkrete Infrastruktur einer multivalenten Energieversorgungsanlage zu konfigurieren, umfasst eine erfindungsgemäße Vorrichtung eine Erfassungseinrichtung. Die Vorrichtung kann beispielsweise ein Computer, Tablet, Smartphone oder eine sonstige Vorrichtung mit graphischer Benutzeroberfläche sein. In einem Speicher der Vorrichtung ist eine Basiskonfiguration BK gespeichert. Die Basiskonfiguration BK kann aus dem Speicher geladen werden. In einem Menü kann eine graphische Darstellung der Basiskonfiguration BK angezeigt werden. Durch Anklicken oder Berühren kann ein Installateur oder ein sonstiger Benutzer für jede der Komponenten konkrete Ausführungen aus einer Liste oder einer graphischen Darstellung von Komponenten in einer Menüführung wählen.

Durch das Auswählen der Komponenten überträgt der Benutzer die tatsächlich realisierte Konfiguration der Energieversorgungsanlage auf eine graphische Darstellung der Anlagenkonfiguration AK. Die erzeugte Anlagenkonfiguration AK kann ein Hydraulikschema beziehungsweise Blockschaltbild der Energieversorgungsanlage sein. Beziehungen der Komponenten sowie Informationen über deren Funktionen und Wirkungen werden durch die Anlagenkonfiguration dargestellt und können aus dieser von einer Steuereinrichtung erfasst werden. Ferner können Messpunkte, Sensoren und weitere Komponenten, die in der Energieversorgungsanlage enthalten sind, in das Hydraulikschema beziehungsweise Blockschaltbild (Anlagenkonfiguration AK) hinzugefügt werden. An unbesetzten Positionen in der Basiskonfiguration BK können beispielsweise Direktverbindungen an der jeweiligen Stelle platziert werden.

Schritt für Schritt entsteht so das Hydraulikschema beziehungsweise das Blockschaltbild AK der Energieversorgungsanlage. Nachdem alle Komponenten gewählt sind kann die fertige Konfiguration abgespeichert und an eine Steuereinrichtung übertragen werden. Das erzeugte Hydraulikschema beziehungsweise das Blockschaltbild kann dann zum Steuern der Energieversorgungsanlage durch die Steuereinrichtung verwendet werden.

### Zweites Ausführungsbeispiel

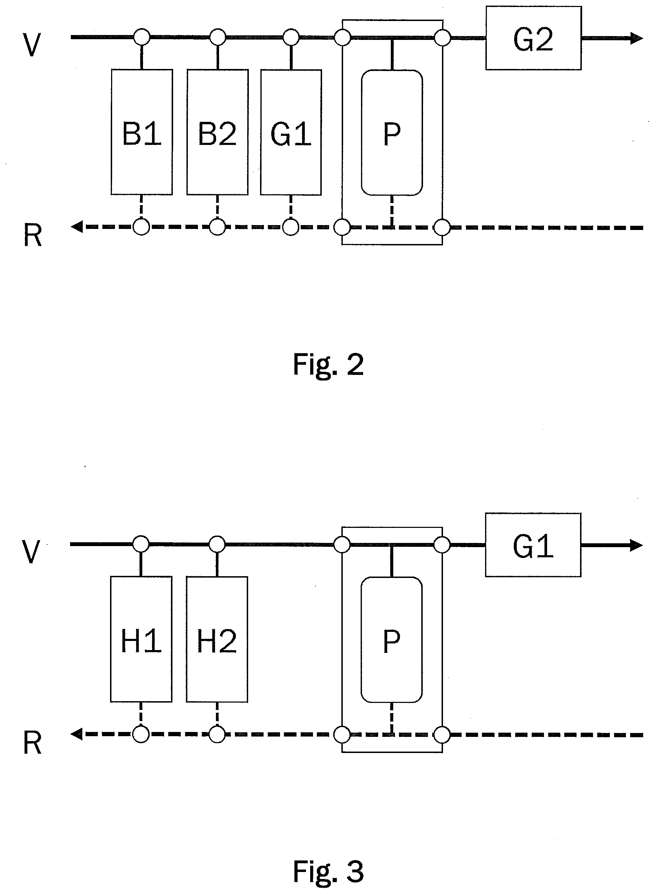

Figur 2 zeigt eine schematische Darstellung eines Ausführungsbeispiels einer multivalenten Energieversorgungsanlage zum Bereitstellen von Wärme und elektrischer Energie. In Figur 2 ist ein Hydraulikschema der Energieversorgungsanlage dargestellt, welches aus einer Basiskonfiguration BK gemäß Figur 1 durch Auswählen der einzelnen Komponenten erzeugt wurde.

Die Energieversorgungsanlage weist zwei Blockheizkraftwerke (BHKW) B1, B2 und zwei Gaskessel G1, G2 auf, wobei die beiden BHKWs B1, B2 jeweils zwischen einem Vorlauf V und einem Rücklauf R parallel zueinander angeordnet sind. Über den Rücklauf R fließt das von Verbraucherseite kommende Trägermedium zu den Energieerzeugern, die dem Trägermedium Wärme zuführen. Über den Vorlauf V fließt das Trägermedium zum Verbraucherkreislauf (nicht dargestellt).

Ein erster Gaskessel G1 ist ebenfalls parallel zu den BHKWs B1, B2 stromabwärts am Vorlauf V angeordnet. Weiter stromabwärts am Vorlauf V befindet sich zudem ein Pufferspeicher P parallel zum ersten Gaskessel G1 und den BHKWs B1, B2. Stromabwärts vom Pufferspeicher P ist ein zweiter Gaskessel G2 in Reihe im Vorlauf V angeordnet, so dass der zweite Gaskessel G2 die Vorlauftemperatur direkt anheben kann. Aufgrund der Anordnung des zweiten Gaskessels G2 im Vorlauf nach dem Pufferspeicher kann er die Temperatur des im Pufferspeicher gespeicherten Wassers nicht beeinflussen.

Ausgehend von der Basiskonfiguration BK der Figur 1 wird das Hydraulikschema des zweiten Ausführungsbeispiels konfiguriert, indem drei Energieerzeuger B1, B2, G1 parallel zum Pufferspeicher P an Stelle der ersten Energieerzeuger E1, E2 gewählt werden. Der primärseitige PP und sekundärseitige PS Pufferspeicher werden jeweils als Direktverbindung konfiguriert. Der Gaskessel G2 wird als serieller Energieerzeuger an der Stelle E5 in Figur 1 ausgewählt und E6 wird als Direktverbindung konfiguriert. Die Energieübergaben werden ebenfalls als Direktverbindung konfiguriert.

### Drittes Ausführungsbeispiel

Figur 3 zeigt ein Hydraulikschema einer Energieversorgungsanlage gemäß einem dritten Ausführungsbeispiel. Ähnlich wie im zweiten Ausführungsbeispiel weist die Energieversorgungsanlage einen Pufferspeicher P zwischen Vorlauf V und Rücklauf R und einen Gaskessel G1 im Vorlauf V stromabwärts vom Pufferspeicher P auf. Ein erster Holzkessel H1 und ein zweiter Holzkessel H2 sind jeweils parallel zueinander und parallel zum Pufferspeicher P stromaufwärts am Vorlauf V1 angeordnet.

Ausgehend von der Basiskonfiguration BK der Figur 1 wird das Hydraulikschema des dritten Ausführungsbeispiels konfiguriert, indem die zwei Holzkessel H1, H2 parallel zum Pufferspeicher P an Stelle der ersten Energieerzeuger E1, E2 gewählt werden. Der primärseitige PP und sekundärseitige PS Pufferspeicher werden jeweils als Direktverbindung konfiguriert. Der Gaskessel G1 wird als erster serieller Energieerzeuger an der Stelle E5 in Figur 1 ausgewählt und E6 wird als Direktverbindung konfiguriert. Die Energieübergaben werden ebenfalls als Direktverbindung konfiguriert.

### Viertes Ausführungsbeispiel

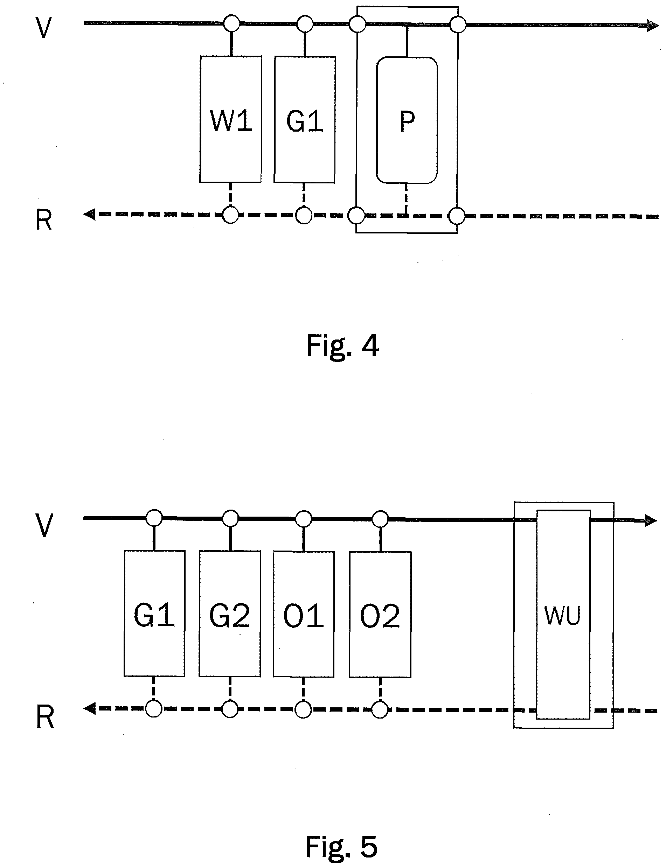

Figur 4 zeigt ein Hydraulikschema einer Energieversorgungsanlage gemäß einem vierten Ausführungsbeispiel. Eine Wärmepumpe W1 und ein Gaskessel G1 sind parallel zu einander und parallel zu einem Pufferspeicher P zwischen Vorlauf V und Rücklauf R angeordnet.

Ausgehend von der Basiskonfiguration BK der Figur 1 wird das Hydraulikschema des vierten Ausführungsbeispiels konfiguriert, indem die Wärmepumpe E1 und der Gaskessel G1 parallel zum Pufferspeicher P an Stelle der ersten Energieerzeuger E1, E2 gewählt werden. Der primärseitige PP und sekundärseitige PS Pufferspeicher werden jeweils als Direktverbindung konfiguriert. Die seriellen Energieerzeuger E5 und E6 werden als Direktverbindung konfiguriert. Die Energieübergaben werden ebenfalls als Direktverbindung konfiguriert.

### Fünftes Ausführungsbeispiel

In einem fünften Ausführungsbeispiel umfasst die Energieversorgungsanlage zwei Gaskessel G1, G2 und zwei Ölkessel O1, O2, die alle parallel zueinander zwischen Vorlauf V und Rücklauf R angeordnet sind. Für die Übergabe der Wärme in einen Verbraucherkreislauf ist eine Wärmeübergabe vorgesehen. Ein Hydraulikschema der Energieversorgungsanlage gemäß dem fünften Ausführungsbeispiel ist in Figur 5 dargestellt.

Ausgehend von der Basiskonfiguration BK der Figur 1 wird das Hydraulikschema des fünften Ausführungsbeispiels konfiguriert, indem die zwei Gaskessel G1, G2 an Stelle der ersten Energieerzeuger E1, E2 gewählt werden. Die beiden Ölkessel O1, O2 werden an Stelle der zweiten Energieerzeuger E3, E4 gewählt. Der Pufferspeicher P sowie der primärseitige PP und sekundärseitige PS Pufferspeicher werden jeweils als Direktverbindung konfiguriert. Die seriellen Energieerzeuger E5 und E6 werden als Direktverbindung konfiguriert. Die Energieübergabe Ü wird als Wärmeübergabe WÜ konfiguriert.

### Sechstes Ausführungsbeispiel

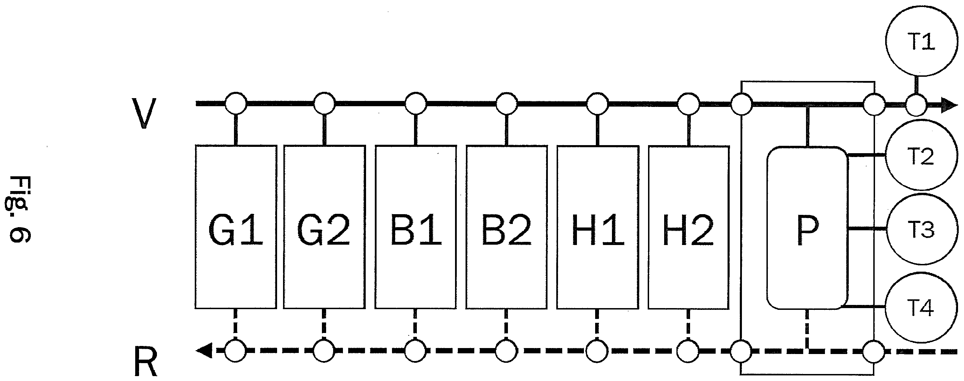

Figur 6 zeigt ein Hydraulikschema einer multivalenten Energieversorgungsanlage gemäß einem sechsten Ausführungsbeispiel. Die Energieversorgungsanlage umfasst je zwei Gaskessel G1, G2, zwei BKHWs B1, B2 und zwei Holzkessel H1, H2 sowie einen Pufferspeicher P. Außerdem ist im Vorlauf V ein Temperatursensor T1 angeordnet, der die Energieversorgungsanlagenvorlauftemperatur misst. Im Pufferspeicher P sind drei Temperatursensoren T2, T3, T4 angeordnet, die jeweils die Temperatur im Pufferspeicher P messen, respektive in einem oberen Bereich, in einem mittleren Bereich und in einem unteren Bereich des Pufferspeichers.

Ausgehend von der Basiskonfiguration BK der Figur 1 wird das Hydraulikschema des sechsten Ausführungsbeispiels konfiguriert, indem an Stelle der ersten Energieerzeuger E1, E2 die zwei Gaskessel G1, G2, zwei BKHWs B1, B2 und zwei Holzkessel H1, H2 gewählt werden. Der Pufferspeicher P wird als Pufferspeicher mit vier Temperatursensoren T1 bis T4 konfiguriert. Der primärseitige PP und sekundärseitige PS Pufferspeicher werden jeweils als Direktverbindung konfiguriert. Die seriellen Energieerzeuger E5 und E6 werden ebenfalls als Direktverbindungen konfiguriert.

Die Steuerung der Energieversorgungsanlage erfolgt in Abhängigkeit der erfassten Konfiguration. Alle sechs Energieerzeuger können direkt auf den Vorlauf beziehungsweise den Puffer heizen. Da alle Energieerzeuger parallel angeschlossen sind, könnten sie unabhängig voneinander arbeiten.

Eine Vorgabe an eine Steuereinrichtung kann sein, dass eine große Energiemenge im Pufferspeicher P bevorratet werden soll. Aus dem Hydraulikschema erkennt die Steuereinrichtung, dass alle Energieerzeuger zum Speichern von Wärme eingesetzt werden können. Ferner erkennt die Steuereinrichtung, dass für die Puffertemperaturregelung ein Puffertemperatursensor T4 an einem unteren Bereich des Pufferspeichers P ausgewählt werden kann. Die Puffersolltemperatur wird hierzu beispielsweise auf 70° C eingestellt. Die Steuereinrichtung S sorgt dann dafür, dass der Pufferspeicher P vollständig mit einer Temperatur von 70°C geladen wird.

Soll der Pufferspeicher P nur ungefähr zur Hälfte bevorratet werden, wird ein Puffertemperatursensor T3 in einem mittleren Bereich des Pufferspeichers P für die Puffertemperaturregelung ausgewählt.

Wenn keine Pufferbevorratung erwünscht ist wird ein Puffertemperatursensor T2 an einem oberen Bereich des Pufferspeichers P für die Puffertemperaturregelung ausgewählt. Die Vorgabe einer Puffersolltemperatur ist nicht erforderlich, da eine Energieerzeugervorlaufsolltemperatur aus einer Anlagenvorlaufsolltemperatur errechnet werden kann. Es wird nur so viel Energie erzeugt, wie von den Verbrauchern aufgenommen wird, der Pufferspeicher P wird in diesem Fall nicht geladen. Die Anlagenvorlauftemperatur kann beispielweise von einem Temperatursensor T1 am Vorlauf V gemessen werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- BK: Basiskonfiguration
- AK: Anlagenkonfiguration (Hydraulikschema)
- V: Vorlauf
- R: Rücklauf
- P: Pufferspeicher
- PP: primärseitiger Pufferspeicher
- PS: sekundärseitiger Pufferspeicher
- Ü: Energieübergabe
- ÜP: primärseitige Energieübergabe
- ÜS: sekundärseitige Energieübergabe
- R1: erste Regeleinrichtung
- R2: zweite Regeleinrichtung
- R3: dritte Regeleinrichtung
- R4: vierte Regeleinrichtung
- R5: fünfte Regeleinrichtung
- E1: erster Energieerzeuger
- E2: zweiter Energieerzeuger
- E3: dritter Energieerzeuger
- E4: vierter Energieerzeuger
- E5: fünfter Energieerzeuger
- E6: sechster Energieerzeuger
- G1: erster Gaskessel
- G2: zweiter Gaskessel
- O1: erster Ölkessel
- O2: zweiter Ölkessel
- B1: erstes BHKW
- B2: zweites BHKW
- H1: erster Holzkessel
- H2: zweiter Holzkessel
- T1: erster Temperatursensor (Vorlauf)
- T2: zweiter Temperatursensor (Pufferspeicher oben)
- T3: dritter Temperatursensor (Pufferspeicher Mitte)
- T4: vierter Temperatursensor (Pufferspeicher unten)

## Patentansprüche

1. Anordnung aus einer Vorrichtung zum Konfigurieren einer multivalenten Energieerzeugungsanlage und einer Steuereinrichtung, wobei die Vorrichtung zum Konfigurieren umfasst:
- eine Speichereinrichtung, in der eine Basiskonfiguration (BK) der Energieerzeugungsanlage gespeichert ist, wobei die Basiskonfiguration umfasst:
∘ eine Vielzahl von Energieerzeugern (E1-E6, B1, B2, G1, G2, H1, H2, O1, O2), die mindestens zwei verschiedene Energieträger nutzen, um Energie in Form von Wärme und/oder Kälte und/oder elektrischer Energie bereitzustellen;
∘ einen Vorlauf (V), durch den ein Trägermedium fließt, welches Energie von den Energieerzeugern (E1-E6, B1, B2, G1, G2, H1, H2, O1, O2) aufnimmt und zu einem Verbraucherkreislauf transportiert;
∘ einen Rücklauf (R), der das vom Verbraucherkreislauf kommende Trägermedium aufnimmt;
∘ einen Pufferspeicher (P), angeordnet zwischen Vorlauf (V) und Rücklauf (R), zum Zwischenspeichern von Energie, die dem Pufferspeicher (P) über den Vorlauf (V) zugeführt wird;
∘ wobei die Energieerzeuger (E1-E6, B1, B2, G1, G2, H1, H2, O1, O2) innerhalb der Basiskonfiguration (BK) an Positionen parallel zum Pufferspeicher (P) zwischen Vorlauf (V) und Rücklauf (R) und/oder in Reihe im Vorlauf (V) angeordnet sein können;
- und eine Erfassungseinrichtung, die dafür ausgelegt ist, für jeden der Energieerzeuger (E1-E6, B1, B2, G1, G2, H1, H2, O1, 02), eine Art aus einer vorbestimmten Menge von Energieerzeugerarten und eine Position des Energieerzeugers (E1-E6, B1, B2, G1, G2, H1, H2, O1, 02) innerhalb der in der Speichereinrichtung gespeicherten Basiskonfiguration (BK) zu erfassen; wobei
- die Vorrichtung zum Konfigurieren dafür ausgelegt ist, die Basiskonfiguration (BK) an die Steuereinrichtung zu übertragen, die die Energieerzeuger (E1-E6, B1, B2, G1, G2, H1, H2, O1, O2) in Abhängigkeit ihrer erfassten Art und Position innerhalb der Basiskonfiguration (BK) steuert.

2. Anordnung nach Anspruch 1, wobei in der Basiskonfiguration (BK) mindestens zwei Energieerzeuger (E1-E6, B1, B2, G1, G2, H1, H2, O1, O2) parallel zueinander zwischen Vorlauf (V) und Rücklauf (R) angeordnet sind.

3. Anordnung nach Anspruch 2, wobei in der Basiskonfiguration (BK) einer der mindestens zwei Energieerzeuger (E1-E6, B1, B2, G1, G2, H1, H2, O1, O2) in Bezug auf den Pufferspeicher (P) stromaufwärts am Vorlauf (V) angeordnet ist.

4. Anordnung nach Anspruch 3, wobei in der Basiskonfiguration (BK) der andere der mindestens zwei Energieerzeuger (E1-E6, B1, B2, G1, G2, H1, H2, O1, O2) in Bezug auf den Pufferspeicher (P) stromabwärts am Vorlauf (V) angeordnet ist.

5. Anordnung nach mindestens einem der vorhergehenden Ansprüche, wobei in der Basiskonfiguration (BK) eine erste Energieübergabe (Ü), parallel zum Pufferspeicher (P) angeordnet ist, und an der das Trägermedium über den Vorlauf (V) in den Verbraucherkreislauf fließt.

6. Anordnung nach mindestens Anspruch 5, wobei in der Basiskonfiguration (BK) parallel zur ersten Energieübergabe (Ü) mindestens eine primärseitige Energieübergabe (ÜP) stromaufwärts am Vorlauf (V) angeordnet ist und/oder mindestens eine sekundärseitige Energieübergabe (ÜS) stromabwärts am Vorlauf (V) angeordnet ist.

7. Anordnung nach mindestens einem der vorhergehenden Ansprüche, wobei in der Basiskonfiguration (BK) parallel zum ersten Pufferspeicher (P) mindestens ein primärseitiger Pufferspeicher (PP) stromaufwärts am Vorlauf (V) angeordnet ist und/oder mindestens ein sekundärseitiger Pufferspeicher (PS) stromabwärts am Vorlauf (V) angeordnet ist.

8. Anordnung nach mindestens einem der vorhergehenden Ansprüche, wobei mindestens ein Energieerzeuger (E1-E6, B1, B2, G1, G2, H1, H2, O1, O2) in Reihe zwischen Pufferspeicher (P) und Energieübergabe (Ü) im Vorlauf (V) angeordnet ist.

9. Anordnung nach mindestens einem der vorhergehenden Ansprüche, wobei die Erfassungseinrichtung ferner dafür ausgelegt ist, für jeden der Pufferspeicher (P, PP, PS) eine Art aus einer vorbestimmten Menge von Pufferspeicherarten zu erfassen.

10. Verfahren zum Konfigurieren und Steuern einer multivalenten Energieerzeugungsanlage, wobei das Verfahren die folgenden Schritte umfasst:
- Auslesen einer Basiskonfiguration (BK) der Energieerzeugungsanlage von einer Speichereinrichtung, wobei die Basiskonfiguration (BK) mindestens umfasst:
o eine Vielzahl von Energieerzeugern (E1-E6, B1, B2, G1, G2, H1, H2, O1, 02), die mindestens zwei verschiedene Energieträger nutzen, um Energie in Form von Wärme und/oder Kälte und/oder elektrischer Energie bereitzustellen;
∘ einen Vorlauf (V), durch den ein Trägermedium fließt, welches Energie von den Energieerzeugern (E1-E6, B1, B2, G1, G2, H1, H2, O1, O2) aufnimmt und zu einem Verbraucherkreislauf transportiert;
∘ einen Rücklauf (R), der das vom Verbraucherkreislauf kommende Trägermedium aufnimmt;
∘ einen Pufferspeicher (P), angeordnet zwischen Vorlauf (V) und Rücklauf (R), zum Zwischenspeichern von Energie, die dem Pufferspeicher (P) über den Vorlauf (V) zugeführt wird;
∘ eine erste Energieübergabe (Ü), die parallel zum Pufferspeicher (P) angeordnet ist, und an der das Trägermedium über den Vorlauf (V) in den Verbraucherkreislauf fließt,
∘ wobei die Energieerzeuger (E1-E6, B1, B2, G1, G2, H1, H2, O1, O2) innerhalb der Basiskonfiguration (BK) an Positionen parallel zum Pufferspeicher (P) zwischen Vorlauf (V) und Rücklauf (R) und/oder in Reihe im Vorlauf (V) angeordnet sein können;
- Erfassen, durch eine Erfassungseinrichtung, für jeden der Energieerzeuger (E1-E6, B1, B2, G1, G2, H1, H2, O1, O2), einer Art aus einer vorbestimmten Menge von Energieerzeugerarten und einer Position des Energieerzeugers (E1-E6, B1, B2, G1, G2, H1, H2, O1, O2) innerhalb der in der Speichereinrichtung gespeicherten Basiskonfiguration (BK);
- Erzeugen einer Anlagenkonfiguration (AK) aus der Basiskonfiguration und den erfassten Arten und Positionen von Energieerzeugern (E1-E6, B1, B2, G1, G2, H1, H2, O1, O2); und
- Übertragen der erzeugten Anlagenkonfiguration (AK) an eine Steuereinrichtung, die die Energieerzeuger (E1-E6, B1, B2, G1, G2, H1, H2, O1, O2) in Abhängigkeit der übertragenen Anlagenkonfiguration (AK) steuert.

## Claims

1. An arrangement consisting of an apparatus for configuring a multivalent energy supply system and a control device, said apparatus for configuring comprising:
- a memory device in which a base configuration (BK) of said energy supply system is stored, said base configuration comprising:
∘ a plurality of energy generators (E1-E6, B1, B2, G1, G2, H1, H2, O1, O2) using at least two different energy carriers to provide for energy in the form of heat and/or cold and/or electrical energy;
∘ a flow (V) through which a carrier medium flows which receives energy from the energy generators (E1-E6, B1, B2, G1, G2, H1, H2, O1, O2) and transports it to a consumer circuit;
∘ a return flow (R) receiving said carrier medium coming from said consumer circuit;
∘ a buffer storage (P) arranged between said flow (V) and said return flow (R) for temporarily storing energy supplied to said buffer storage (P) via said flow (V);
∘ wherein the energy generators (E1-E6, B1, B2, G1, G2, H1, H2, O1, O2) within said base configuration (BK) can be arranged at positions in parallel to said buffer storage (P) between said flow (V) and said return flow (R) and/or in series in said flow (V);
- and a detection device configured to detect, for each of the energy generators (E1-E6, B1, B2, G1, G2, H1, H2, O1, O2), a type from a predetermined set of energy generator types and a position of the energy generators (E1-E6, B1, B2, G1, G2, H1, H2, O1, O2) within said base configuration (BK) stored in said memory device; wherein
- said apparatus is configured to transmit said base configuration (BK) to a control device controlling the energy generators (E1-E6, B1, B2, G1, G2, H1, H2, O1, O2) based on their detected type and position within said base configuration (BK).

2. The arrangement according to claim 1, wherein, in said base configuration (BK), at least two energy generators (E1-E6, B1, B2, G1, G2, H1, H2, O1, O2) are arranged in parallel to each other between said flow (V) and said return flow (R).

3. The arrangement according to claim 2, wherein, in said base configuration (BK), one of the at least two energy generators (E1-E6, B1, B2, G1, G2, H1, H2, O1, O2) is arranged upstream at said flow (V) with respect to said buffer storage (P).

4. The arrangement according to claim 3, wherein, in said base configuration (BK), the other of the at least two energy generators (E1-E6, B1, B2, G1, G2, H1, H2, O1, O2) is arranged downstream at said flow (V) with respect to said buffer storage (P).

5. The arrangement according to at least one of the preceding claims, wherein, in said base configuration (BK), a first energy transfer (Ü) at which said carrier medium flows into said consumer circuit via said flow (V) is arranged in parallel to said buffer storage (P).

6. The arrangement according to claim 5, wherein, in said base configuration (BK) in parallel to said first energy transfer (Ü), at least one primary-side energy transfer (UP) is arranged upstream at said flow (V) and/or at least one secondary-side energy transfer (ÜS) is arranged downstream at said flow (V).

7. The arrangement according to at least one of the preceding claims, wherein, in said base configuration (BK) in parallel to the first buffer storage (P), at least one primary-side buffer storage (PP) is arranged upstream at said flow (V) and/or at least one secondary-side buffer storage (PS) is arranged downstream at said flow (V).

8. The arrangement according to at least one of the preceding claims, wherein at least one energy generator (E1-E6, B1, B2, G1, G2, H1, H2, O1, O2) is arranged in series between said buffer storage (P) and said energy transfer (Ü) in said flow (V).

9. The arrangement according to at least one of the preceding claims, wherein said detection device is further configured to detect, for each of the buffer storages (P, PP, PS), a type from a predetermined set of buffer storage types.

10. A method for configuring and controlling a multivalent energy supply system, said method comprising the steps of:
- reading a base configuration (BK) of said energy supply system from a memory device, said base configuration comprising:
∘ a plurality of energy generators (E1-E6, B1, B2, G1, G2, H1, H2, O1, O2) using at least two different energy carriers to provide energy in the form of heat and/or cold and/or electrical energy.

## Revendications

1. Agencement constitué d'un dispositif de configuration d'une installation de production d'énergie multivalente et d'un équipement de commande, dans lequel le dispositif de configuration comprend :
- un équipement de stockage dans lequel est stockée une configuration de base (BK) de l'installation de production d'énergie, dans lequel la configuration de base comprend :
∘ une pluralité de producteurs d'énergie (E1-E6, B1, B2, G1, G2, H1, H2, O1, O2) qui exploitent au moins deux sources d'énergie différentes pour mettre à disposition une énergie sous la forme de chaleur et/ou de froid et/ou d'énergie électrique ;
∘ un aller (V) à travers lequel s'écoule un milieu porteur, lequel reçoit une énergie des producteurs d'énergie (E1-E6, B1, B2, G1, G2, H1, H2, O1, O2) et la transporte vers un circuit d'utilisateur ;
∘ un retour (R) qui reçoit le milieu porteur en provenance du circuit d'utilisateur ;
∘ un stockage tampon (P), agencé entre l'aller (V) et le retour (R), pour un stockage intermédiaire d'une énergie qui est amenée au stockage tampon (P) via l'aller (V) ;
∘ dans lequel les producteurs d'énergie (E1-E6, B1, B2, G1, G2, H1, H2, O1, O2) peuvent être agencés à l'intérieur de la configuration de base (BK) en des positions parallèles au stockage tampon (P) entre l'aller (V) et le retour (R) et/ou en série dans l'aller (V) ;
- et un équipement de saisie qui est conçu, pour chacun des producteurs d'énergie (E1-E6, B1, B2, G1, G2, H1, H2, O1, O2), pour saisir une famille depuis une quantité prédéterminée de familles de producteurs d'énergie et une position du producteur d'énergie (E1-E6, B1, B2, G1, G2, H1, H2, O1, O2) à l'intérieur de la configuration de base (BK) stockée dans l'équipement de stockage ; dans lequel
- le dispositif de configuration est conçu pour transmettre la configuration de base (BK) à l'équipement de commande qui commande les producteurs d'énergie (E1-E6, B1, B2, G1, G2, H1, H2, O1, O2) en fonction de leurs famille et position saisies à l'intérieur de la configuration de base (BK).

2. Agencement selon la revendication 1, dans lequel, dans la configuration de base (BK), au moins deux producteurs d'énergie (E1-E6, B1, B2, G1, G2, H1, H2, O1, O2) sont agencés parallèlement les uns aux autres entre l'aller (V) et le retour (R).

3. Agencement selon la revendication 2, dans lequel, dans la configuration de base (BK), l'un des au moins deux producteurs d'énergie (E1-E6, B1, B2, G1, G2, H1, H2, O1, O2) est agencé contre l'aller (V) en amont par rapport au stockage tampon (P).

4. Agencement selon la revendication 3, dans lequel, dans la configuration de base (BK), l'autre des au moins deux producteurs d'énergie (E1-E6, B1, B2, G1, G2, H1, H2, O1, O2) est agencé contre l'aller (V) en aval par rapport au stockage tampon (P).

5. Agencement selon au moins l'une des revendications précédentes, dans lequel, dans la configuration de base (BK), un premier transfert d'énergie (Ü) est agencé parallèlement au stockage tampon (P), et contre lequel transfert d'énergie le milieu porteur s'écoule jusque dans le circuit d'utilisateur via l'aller (V).

6. Agencement selon au moins la revendication 5, dans lequel, dans la configuration de base (BK), parallèlement au premier transfert d'énergie (Ü) est agencé contre l'aller (V) en amont au moins un transfert d'énergie côté primaire (ÜP), et/ou est agencé contre l'aller (V) en aval au moins un transfert d'énergie côté secondaire (ÜS).

7. Agencement selon au moins l'une des revendications précédentes, dans lequel, dans la configuration de base (BK), parallèlement au premier stockage tampon (P) est agencé contre l'aller (V) en amont au moins un stockage tampon côté primaire (PP), et/ou est agencé contre l'aller (V) en aval au moins un stockage tampon côté secondaire (PS).

8. Agencement selon au moins l'une des revendications précédentes, dans lequel au moins un producteur d'énergie (E1-E6, B1, B2, G1, G2, H1, H2, O1, O2) est agencé en série dans l'aller (V) entre le stockage tampon (P) et le transfert d'énergie (Ü).

9. Agencement selon au moins l'une des revendications précédentes, dans lequel l'équipement de saisie est en outre conçu, pour chacun des stockages tampons (P, PP, PS), pour saisir une famille depuis une quantité prédéterminée de familles de stockages tampon.

10. Procédé de configuration et de commande d'une installation de production d'énergie multivalente, dans lequel le procédé de configuration comprend les étapes suivantes consistant à :
- lire une configuration de base (BK) de l'installation de production d'énergie depuis un équipement de stockage, dans lequel la configuration de base (BK) comprend au moins :
∘ une pluralité de producteurs d'énergie (E1-E6, B1, B2, G1, G2, H1, H2, O1, O2) qui exploitent au moins deux sources d'énergie différentes pour mettre à disposition une énergie sous la forme de chaleur et/ou de froid et/ou d'énergie électrique ;
∘ un aller (V) à travers laquelle s'écoule un milieu porteur, lequel reçoit une énergie des producteurs d'énergie (E1-E6, B1, B2, G1, G2, H1, H2, O1, O2) et la transporte vers un circuit d'utilisateur ;
∘ un retour (R) qui reçoit le milieu porteur en provenance du circuit d'utilisateur ;
∘ un stockage tampon (P), agencé entre l'aller (V) et le retour (R), pour un stockage intermédiaire d'une énergie qui est amenée au stockage tampon (P) via l'aller (V) ;
∘ un premier transfert d'énergie (Ü) qui est agencé parallèlement au stockage tampon (P), et contre lequel transfert d'énergie le milieu porteur s'écoule jusque dans le circuit d'utilisateur via l'aller (V),
∘ dans lequel les producteurs d'énergie (E1-E6, B1, B2, G1, G2, H1, H2, O1, O2) peuvent être agencés à l'intérieur de la configuration de base (BK) en des positions parallèles au stockage tampon (P) entre l'aller (V) et le retour (R) et/ou en série dans l'aller (V) ;
- saisir, par un équipement de saisie, pour chacun des producteurs d'énergie (E1-E6, B1, B2, G1, G2, H1, H2, O1, O2), une famille depuis une quantité prédéterminée de familles de producteurs d'énergie et une position du producteur d'énergie (E1-E6, B1, B2, G1, G2, H1, H2, O1, O2) à l'intérieur de la configuration de base (BK) stockée dans l'équipement de stockage ;
- produire une configuration d'installation (AK) à partir de la configuration de base et des familles et positions saisies de producteurs d'énergie (E1-E6, B1, B2, G1, G2, H1, H2, O1, O2) ; et
- transmettre la configuration d'installation (AK) produite à un équipement de commande qui commande les producteurs d'énergie (E1-E6, B1, B2, G1, G2, H1, H2, O1, O2) en fonction de la configuration d'installation (AK) transmise.
